Europäisches Patentamt

European Patent Office

Office européen des brevets

(19)

(11) Veröffentlichungsnummer: **0 258 330 B1**

# (12) EUROPÄISCHE PATENTSCHRIFT

(45) Veröffentlichungstag der Patentschrift: **05.08.92**

(51) Int. Cl.5: **F02F 3/00**, F16J 1/00, F16J 9/00

(21) Anmeldenummer: **87901346.4**

(22) Anmeldetag: **24.02.87**

(86) Internationale Anmeldenummer:
**PCT/DE87/00061**

(87) Internationale Veröffentlichungsnummer:
**WO 87/05076 (27.08.87 87/19)**

(54) **KOLBENMOTOR.**

(30) Priorität: **25.02.86 DE 3605918**
**25.02.86 DE 3605919**
**11.11.86 DE 3638533**

(43) Veröffentlichungstag der Anmeldung:
**09.03.88 Patentblatt 88/10**

(45) Bekanntmachung des Hinweises auf die Patenterteilung:
**05.08.92 Patentblatt 92/32**

(84) Benannte Vertragsstaaten:
**DE FR IT**

(56) Entgegenhaltungen:
**EP-A- 0 066 022**
**EP-A- 0 143 330**
**DE-A- 3 001 921**
**DE-A- 3 406 479**
**DE-B- 2 912 786**

(73) Patentinhaber: **GREINER, Peter**
**Damooserweg 15**
**W-7981 Vogt(DE)**

Patentinhaber: **PFLÜGER, Hubert**
**Bauernjörgweg 7**
**W-7981 Wetzisreute/Schlier(DE)**

(72) Erfinder: **GREINER, Peter**
**Damooserweg 15**
**W-7981 Vogt(DE)**
Erfinder: **PFLÜGER, Hubert**
**Bauernjörgweg 7**
**W-7981 Wetzisreute/Schlier(DE)**

EP 0 258 330 B1

Rank Xerox (UK) Business Services

## Beschreibung

Kolbenmotoren sind hinlänglich bekannt und können als weitgehend konstruktiv ausgereift bezeichnet werden. In der Regel bestehen zumindest die Kolben derartiger Motoren aus Alu, das insbesondere thermisch jedoch nur in Grenzen belastbar ist, d.h. bis etwa 450ºC, wobei die Festigkeit bei zunehmenden Temperaturen nachlassen. Außerdem hat Alu einen relativ hohen Ausdehnungskoeffizienten, so daß die Kolben in bezug auf die Zylinderlauffläche ein relativ großes Spiel haben müssen. Die Tendenz geht heute in Rücksicht auf die mit derartigen Motoren gegebene Umweltbelastung dahin, das Benzin-Luftgemisch abzumagern, was aber zu höheren Temperaturen beim Betrieb des Motors führt. Der Betrieb mit bleifreiem Benzin verlangt außerdem höhere Oktanzahlen. Bei schlagartigen Belastungen, wie sie durch den Verbrennungsvorgang in derartigen Motoren permanent gegeben sind, klingt Alu sehr hell, was also zu einer Geräuschbildung mit relativ hoher Frequenz führt. In Rücksicht auf das Dehnungsverhalten von Alu, wie vorerwähnt, führt das notwendig große Spiel zwischen Kolben und Zylinderwand, insbesondere beim Kaltstart, unvermeidbar zu einem mehr oder weniger starken Durchblasen. Wollte man dabei höhere Temperaturen in Betracht ziehen, so müßte der thermisch hoch belastete, sogenannte Fernersteg des Kolbens bezüglich seines Durchmessers noch weiter zurückgenommen werden, was die Durchblastendenz noch weiter erhöht.

Da die Motoren heutiger Bauart sowohl hinsichtlich der Materialauswahl als auch konstruktiv als gewissermaßen voll "ausgereift" zu bezeichnen sind, besteht für diese Motoren praktisch keine Möglichkeit mehr, den heutigen Tendenzen hinsichtlich Kraftstoffersparnis und Umweltbelastung am Motor selbst Rechnung zu tragen.

Une hier Abhilfe zu schaffen, ist bereits ein Kolbenmotor mit einem Kohlenstoffkolben vorgeschlagen worden (DE-B 29 12 786). Aus Kohlenstoff bestehende Kolben haben gegenüber den herkömmlichen Kolben, die aus Aluminium oder Grauguß bestehen, den wesentlichen Vorteil eines relativ niedrigen Ausdehnungskoeffizienten, so daß das zwischen der Zylinderlauffläche und dem Kolben bestehende Spiel, auch bei Verwendung metallischer Zylinderlaufflächen, relativ klein sein kann. Dadurch tritt ein geringeres Durchblasen zwischen Zylinderwand und Kolben auf. Außerdem lässt sich durch die Verwendung von Kohlenstoff für Kolben die Geräuschbildung herabsetzen.

Bei dem vorstehend genannten bekannten Kolbenmotor besteht der Kolben aus durch Pyrolisieren von Pech oder Kunststoff umgewandeltem Kohlenstoff, wobei im Kolbenschaft, im Kolbenboden und um die Kolbenbolzenaugen herum Kohlenstoffasern als in Kraftflußrichtung verlaufende Verstärkungen eingebettet sind. Hierdurch soll die mechanische Festigkeit des Kolbens gegenüber den beim Betrieb auftretenden Belastungen durch die in Kraftflußrichtung verlaufenden Kohlenstoffasern erreicht werden.

Aus der DE-A 34 06 479 ist ebenfalls ein aus Kohlenstoff bestehender Kolben bekannt, der eine Bewehrung durch Kohlenstoffasern enthält, wobei der Kolben mehrteilig aufgebaut ist. Das Herstellungsverfahren von Kolben aus Kohlenstoff der vorstehend geschilderten Art ist jedoch relativ aufwendig und die Bewehrung mit kohlenstoffasern führt bei längerer Betriebszeit zu Abläseerscheinungen Zwischen den Fasern und dem Kohlenstoff und somit zur Zerstörung des kolbens. Solche Kolben haben sich in der Praxis bisher auch nicht durchgesetzt.

Der Erfindung liegt demgemäß die Aufgabe zugrunde, einen Kolbenmotor dahingehend zu verbessern, daß den eingangs genannten Tendenzen besser Rechnung getragen werden kann, ohne dabei das bisherige Konstruktionsprinzip verlassen zu müssen und der, sofern es sich um einen Zweitaktmotor handelt, die Möglichkeit bietet, auch ölfrei betrieben werden zu können.

Diese Aufgabe ist nach der Erfindung durch die im Hauptanspruch angeführten Merkmale gelöst. Vorteilhafte Ausführungsformen ergeben sich nach den Unteransprüchen.

Wesentlich für diese Lösung ist also, daß auf die Verwendung von Alu für die Ausbildung des Kolbens ganz verzichtet ist, sondern dafür ein anderes, bisher überhaupt noch nicht in Betracht gezogenes Material verwendet wird, nämlich modifizierter Kohlenstoff , der im Vergleich zu Alu einen relativ geringen Ausdehnungskoeffizienten hat und thermisch höher belastbar ist. Allerdings ist hierfür nicht schlechthin jeder Preßgraphit geeignet, sondern insbesond. Elektrographit und zwar mit bestimmter Mindestbiegefestigkeit, denn es hat sich gezeigt, daß Preßgraphite mit geringeren Biegefestigkeiten den in derartigen Motoren auftretenden Belastungen nicht gewachsen sind und im Bereich des Kolbenbodens reißen. Mit der Auswahl eines derartigen Materials allein ist es aber auch nicht getan, sondern es ist auch erforderlich, den Kolbenboden mindestens verbrennungsraumseitig abbrandfest vergütet auszubilden, was aber problemlos bewerkstelligt werden kann, indem man die Beaufschlagungsfläche karbidisiert bzw. siliziert und erforderlichenfalls auch die Kolbenbodeninnenfläche. Erst diese beiden Maßnahmen zusammen, d.h. Auswahl eines Materials mit ausreichender Biegefestigkeit und Ab- bzw. Ausbrandfestigkeit des Kolbens sind Voraussetzung dafür Kolben aus Kohlenstoff der genannten, speziellen Art in Kolbenmotoren verwenden zu können.

Unter dem Begriff "vergütet" sind im vorliegenden Fall zu verstehen Karbidisieren, Silizieren, Nitrieren aber auch modifizierende Behandlungen von Graphit, insbesondere in Richtung auf größere Härtevermittlung und zwar für den Kolbenboden, sowie die Zylinderlauffläche und die Kolbenringe dann, wenn diese auch aus kohlenstoff bestehen. Für Kolbenringe von Zweitaktmotoren gilt dies aber nur dann, wenn solche Motoren wie bisher mit Treibstoff-Ölgemisch gefahren werden.

Ferner ist unter der Definition "mindestens die Zylinderlauffläche aus dem gleichen oder ähnlichen Material herzustellen" zu verstehen, ggf. auch den den Zylinder enthaltenden Block aus diesem Material bilden zu können, welcher Möglichkeit aber aus wirtschaftlichen Gründen der Preis dieses Materials entgegensteht und dies sowieso nur für eine Luftkühlung in Betracht gezogen werden könnte, die keine Hohlformen des Blockes verlangt. Grundsätzlich könnte also der Zylinder aus dem gleichen Material gebildet werden, bevorzugt wird aber, und zwar in Rücksicht auf die das Wärme dehn verhalten bestimmende Kühlbarkeit in herkömmlicher Weise mittels Wasser eine Ausbildung der Lauffläche im Zylinder aus siliziertem Kohlenstoff, Siliziumcarbid, Siliziumnitrid oder bspw. Invar-Stahl mit einer keramischen Spritzschicht und zwar in Form einer in den Zylinder einsetzbaren Laufbüchse. Unter diesen Materialien sind die erwähnten "ähnlichen Materialien" zu verstehen, die in etwa das gleiche Wärme dehn verhalten wie das Kolbenmaterial haben. Sofern das gleiche Material wie das für den Kolben benutzt wird, besteht auch die Möglichkeit, die Kolbenringe aus entsprechendem Material entsprechend vergütet zu fertigen. Hierbei ist aber zu berücksichtigen, daß die Elastizität von Kolbenringen aus derartigem Material nicht ausreicht, um derartige Kolbenringe in ihre Nuten am Kolben einbringen zu können. Sofern also Kolbenringe aus dem gleichen Material benutzt werden, bedarf dies einer Sonderkonstruktion, nämlich vorteilhafterweise dahingehend, daß ein solcher Kolbenring zweiteilig ausgebildet wird, wobei an mindestens einem stoßstellenbereich der beiden Ringteile ein federndes Spreizelement aus dem gleichen Material angeordnet ist, was noch näher erläutert wird. Obgleich grundsätzlich möglich, sind wegen des ungünstigen Verschleißverhaltens Kolbenringe aus unvergütetem Graphit zu vermeiden, zumal es ohne weiteres möglich ist, wie bisher Ferroguß zu verwenden, der allerdings mit einer Keramikbeschichtung versehen werden muß oder Kolbenringe aus Vollkeramik oder schließlich Kolbenringe aus Carbonfasern, die ohne weiteres einer Silizierung zugänglich sind. Je nach Auswahl des Materials für die Kolbenlaufbüchse im Zylinder, hat man es also in der Hand, die jeweils erforderlichen Kolbenringe hinsichtlich ihrer Elastizität entweder konstruktiv in noch zu erläuternder Weise anzupassen oder dafür ausreichend elastisches Material der genannten Art zu verwenden. Dies gilt in bezug auf Zweitaktmotoren aber nur dann, wenn diese mit Benzin/ Öl-Gemisch betrieben werden.

Hinsichtlich der bevorzugt vorgesehenen Ausbildung der Lauffläche in Form einer in den Zylinderblock einzusetzenden Büchse, was ja grundsätzlich bekannt ist, ergibt sich in bezug auf das Material des Zylinderblockes insbesondere bei Luftkühlung das Problem unterschiedlichen Wärmedehnungsverhaltens, d.h. das Zylinderblockmaterial dehnt sich schneller und weiter aus als das Material der Laufbüchse, was dazu führen würde, daß die Laufbüchse im Block ihren Halt verlöre. Dieses Problem, das sich durch die bevorzugte Anwendung einer in den Zylinderblock einzusetzenden Büchse ergibt, ist dadurch lösbar, daß man konstruktiv für eine elastische Umfassung der Büchse sorgt, was ebenfalls noch näher erläutert wird. Die mit dem wesentlichen Punkt der erfindungsgemäßen Lösung, nämlich Verwendung eines modifizierten Kohlenstoffs bestimmter Biegefestigkeit verbundenen Randprobleme sind also ebenfalls sowohl hinsichtlich der Kolbenringe als auch hinsichtlich der zu berücksichtigenden unterschiedlichen Dehnungsverhalten beherrschbar, zumal bei Wasserkühlung keine gravierenden Dehnungsprobleme auftreten, da hier das Material des zylinderblockes eine ausreichende Kühlung erfährt und bei Dehnung dem Kolben gewissermaßen nicht "davonlaufen" kann. Dies gilt auch für den Bereich der Lagerung des Kolbenbolzens, an dem das Pleuel angelenkt werden muß. Da für den Kolbenbolzen wegen der zu berücksichtigenden Belastung nicht ebenfalls Preßgraphit benutzt werden kann, sondern eine Stahlbüchse, die einen größeren Ausdehnungskoeffizienten als Preßgraphit hat, würde dies sehr schnell zu einem Zersprengen des Kolbens führen. Bei herkömmlichen Kolben aus Alu ergibt sich dieses Problem nicht, weil Alu im Vergleich zu Stahl einen größeren Ausdehnungskoeffizienten'hat, wodurch sich automatisch ein ausreichendes Spiel im Betriebszustand für den Kolbenbolzen ergibt, das aber grundsätzlich für den Betriebszustand an sich nicht wünschenswert ist. Im vorliegenden Fall ist diesesm Problem nach der Erfindung in einfacher Weise dadurch begegnet, daß die Bohrungen am Kolben für den Kolbenbolzen in bezug auf den Außendurchmesser des Kolbenbolzens mit einem Spiel derart bemessen sind, daß sich bei Betriebstemperatur ein minimales Spiel ergibt. Hierbei liegen also in günstiger Weise die Verhältnisse gerade umgekehrt, d.h., der Kolbenbolzen hat im warm gefahrenen Betriebszustand des Motors sein ideales, d.h. geringes Lagerspiel.

Die erfindungsgemäße Lösung führt im Endergebnis zu einem thermisch höher belastbaren Motor und damit zu der Möglichkeit, den Motor mit abgemagertem Treibstoff/Luftgemisch fahren zu können. Außerdem kann, und dies ist ebenfalls wesentlich, das Spiel zwischen Kolben und Laufbüchse wesentlich geringer gehalten werden, was dem sogenannten Durchblasen vorteilhaft entgegenwirkt. Da Preßgraphit bei schlagartiger Belastung wesentlich dumpfer klingt, also mit wesentlich niedrigeren Frequenzen schwingt, ist auch die Geräuschbiidung durch einen derartigen Kolben wesentlich reduziert. Hinzu kommt noch, daß das erfindungsgemäß benutzte Kolbenmaterial mikrostrukturell gesehen, saugfähig ist, also Öl aufnehmen und wieder abgeben kann, und demgemäß dessen sowieso gegebenen Selbstschmiereigenschaften dadurch noch verbessert werden und damit die Kaltlaufeigenschaften eines solchen Motors wesentlich verbessert sind.

Der erfindungsgemäße Motor wird nachfolgend anhand der zeichnerischen Darstellung eines Ausführungsbeispieles näher erläutert.

Es zeigt schematisch

Fig. 1A, B      Querschnitte durch einen Viertaktmotor mit Wasserkühlung und einen Zweitaktmotor mit Luftkühlung;

Fig. 2      einen Zylinder mit Kolben für Luftkühlung;

Fig. 3      in Draufsicht eine besondere Ausführungsform des Kolbenringes;

Fig. 4      einen Längsschnitt durch einen Motorblock im Bereich einer Lagerbüchse längs Linie I-I in Fig. 5;

Fig. 5      eine halbe Draufsicht auf die Ausführungsform nach Fig. 4;

Fig. 6      einen Schnitt längs Linie III-III in Fig. 4;

Fig. 7      eine Draufsicht auf einen Motorblock mit nebeneinander angeordneten, mehreren Zylindern;

Fig. 8      einen Längsschnitt durch einen luftgekühlten Motorblock mit eingesetzter Lagerbüchse und

Fig. 9      einen Schnitt längs Linie VI-VI in Fig. 8.

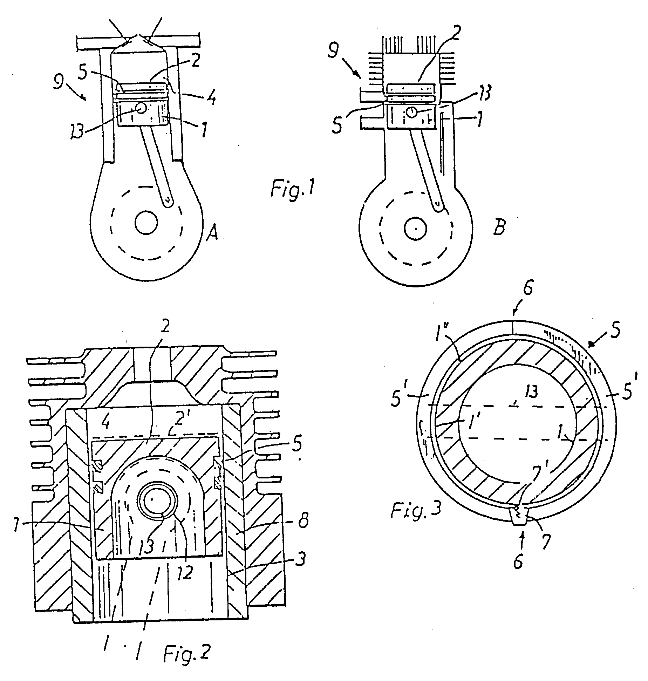

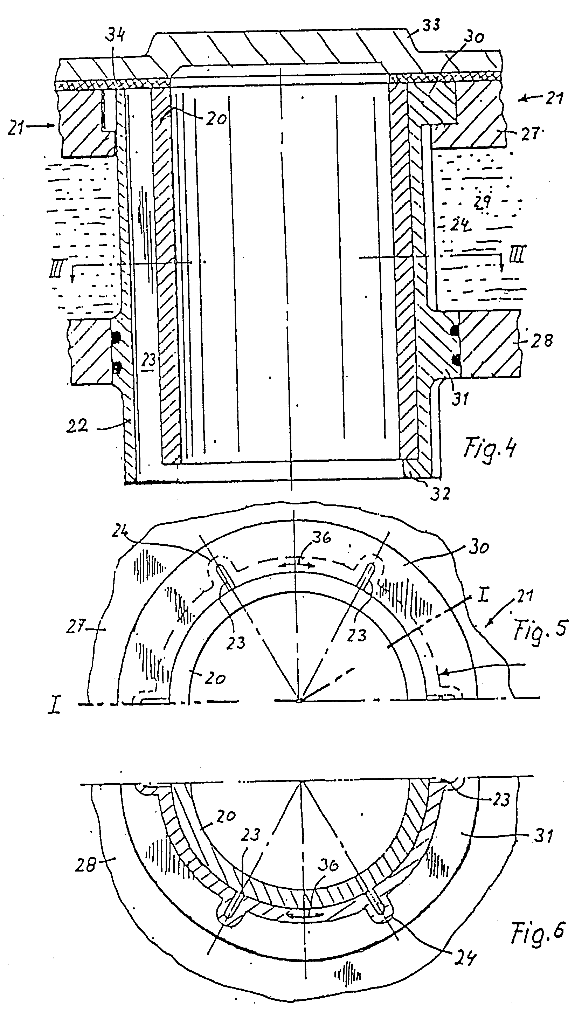

Wie aus Fig. 1A erkennbar, besteht der Viertaktmotor aus einem Zylinderblock 9 mit einem oder mehreren mit Ventilen versehenen Zylindern 4, wobei in jedem Zylinder ein mit mindestens einem Kolbenring 5 bestückter Kolben angeordnet ist, der, mit dem Kurbeltrieb in Verbindung stehend, im Zylinder 4 auf und ab beweglich ist. Abgesehen von den Ventilen gilt für den Zweitaktmotor gemäß Fig. 1B das gleiche. Der bzw. die Kolben 1 sind aus modifiziertem Kohlenstoff, bspw. Preßgraphit oder Elektrographit mit einer im Bereich von mindestens 75 N/mm², vorzugsweise über 120 N/mm², liegenden Biegefestigkeit ausgebildet. Wesentlich ist dabei, daß der Boden 2 mindestens an der Beaufschlagungsfläche 2' (siehe Fig. 2) abbrandfest vergütet ausgebildet ist und zwar vergütet im Sinne wie einleitend vorerwähnt, was bspw. in der Weise erfolgen kann, daß Siliziumpulver in dünner Schicht aufgebracht und im Autoklaven aufsiliziert wird, wobei das Pulver mit dem Graphit eine homogene Verbindung eingeht und die "Vergütungsschicht" sowohl einen Abbrandschutz darstellt als auch zur Verfestigung des Gefüges der Beaufschlagungsfläche 2' beiträgt. Ferner ist die Lauffläche 3 des Zylinders aus gleichem aber laufflächenvergütetem oder einem ähnlichen Material qebildet, das etwa das gleiche Wärmedehnungsverhalten wie das Material des Kolbens hat. Zweckmäßig und vorteilhaft wird dabei die Lauffläche in Form einer Büchse eingesetzt, wobei es aber grundsätzlich auch möglich ist, die Wandung des Zylinders entsprechend zu vergüten. Der mindestens eine Kolbenring 5 jedes Kolbens 1 ist aus gleichem und/oder abbrandfest gebildetem Material gebildet, wobei dem Kolbenring 5 hinsichtlich seiner Elastizität konstruktiv oder durch Wahl ausreichend elastischen Materials die erforderliche Elastizität vermittelt wird. Die hier angesprochene Elastizität bezieht sich darauf, den Kolbenring bei radialer Verformung in axialer Richtung auf den Kolben aufziehen zu können und in die entsprechende Nut einrasten zu lassen. Hinsichtlich der Zuordnung des Kolbenbolzens 13 zu den Bohrungen 12 am Kolben besteht eine vorteilhafte Weiterbildung darin, daß die Bohrungen 12 am Kolben 1 für einen Kolbenbolzen 13 aus Stahl in bezug auf dessen Außendurchmesser mit einem Spiel derart bemessen sind, daß bei Betriebstemperatur ein minimales Spiel gegeben ist. Im kalten Zustand hat also der Kolbenbolzen 13 gemäß Fig. 2 in bezug auf die Bohrung 12 ein ausreichendes Spiel, das dann weitgehend bei Erwärmung durch entsprechende Ausdehnung des stählernen Kolbenbolzens 13 ausgeglichen wird, so daß dann im Betriebszustand ein minimales Spiel vorhanden ist. Beispielsweise beträgt dieses Spiel bei einem Bolzendurchmesser von 14 mm im kalten Zustand 1 - 1,5 Hundertstel Millimeter, was ausreichend ist, um der Wärmedehnung des Kolbenbolzens bei Betriebstemperatur Rechnung zu tragen. Bevorzugt wird aber die Ausbildung des Kolbenbolzens aus Siliciumnitrid, da dieses Material praktisch den gleichen Ausdehnungskoeffizienten wie das Kolbenmaterial hat.

In Rücksicht auf die Laufflächenvergütung können die Kolbenringe 5 aus keramikbeschichtetem Ferroguß, aus Keramik, wie Zirkonoxid od. dgl. oder aus vergütetem Karbonfasermaterial gebildet sein. Es ist aber auch möglich, das gleiche Material wie für den Kolben zu benutzen und zwar in Rücksicht auf den Verschleiß ebenfalls entsprechend vergütet, was jedoch eine spezielle Konstruktion des Kolbenringes im Sinne der Fig. 3 erfordert, da Elektrographit keine ausreichende Elastizität hat, um den Kolbenring aus diesem Material in axialer Richtung, wie vorerwähnt, auf den Kolben aufbringen zu können. Ein derartiger Kolbenring besteht gemäß Fig. 3 aus zwei Teilen 5', zwischen denen an mindestens einem Stoßstellenbereich 6 ein federndes Spreizelement 7 aus dem gleichen Material angeordnet ist. Die beteiligten Flanken der Teile 5' und des Spreizelementes 7 sind, wie dargestellt, konisch ausgebildet, und das Spreizelement 7 ist im Inneren mit einer kleinen Feder 7' gegen den Nutboden 1' des Kolbens abgestützt. Diese drei Teile können also ohne weiteres und ohne den Kolbenring insgesamt axial aufziehen zu müssen von der Seite her in die betreffende Kolbenringnut 1" eingesetzt werden, wonach der mit diesem Ring bestückte Kolben 1 in den Zylinder 4 eingeschoben wird. Da das Spreizelement unter dem Druck der kleinen Feder 7' steht, legen sich die Teile 5' des Kolbenrings dicht an die Kolbenlauffläche 3 des Zylinders 4 an. Durch die Zwischenschaltung des Spreizelementes 7 ist auch bei dieser Materialauswahl die entsprechende Federungseigenschaft in bezug auf den ganzen Ring gegeben, die das andere genannte Kolbenringmaterial von sich aus mitbringt. Die Anordnung einer Laufbüchse 8 im Sinne der Fig. 2 innerhalb eines Zylinderblockes aus anderem Material geschieht in herkömmlicher Weise, wobei hinsichtlich des anderen Dehnungsverhaltens des Zylinderblockmaterials, sei es Stahl- oder Aluguß, dies kein wesentliches Problem darstellt, wenn durch das Kühlwasser dieses Material ausreichend gekühlt werden kann, sich entsprechend gering ausdehnt und damit dieses Material der eingesetzten Laufbüchse 8, die einerseits ein geringeres Ausdehnungsvermögen hat, andererseits aber stärker temperaturbeaufschlagt ist, nicht "davonlaufen" kann.

Die verschiedenen Konstruktionsmöglichkeiten für den Einsatz und die Fixierung derartiger Laufbüchsen bedarf keiner besonderen Erläuterung, da hierfür eine Unzahl von Konstruktionsmöglichkeiten bekannt ist, einschließlich der Möglichkeiten von Abdichtungen bei sogenannten nassen Zylinderlaufbüchsen.

Wie vorerwähnt, besteht grundsätzlich die Möglichkeit bei Luftkühlung den betreffenden Zylinder 4 aus dem gleichen Material zu fertigen, aus dem auch der Kolben gefertigt ist. Wegen des Preises dieses Materials wird jedoch auch hierbei die Anordnung einer Laufbüchse 8 im vorerwähnten Sinne bevorzugt, wobei jedoch zu berücksichtigen ist, daß hierbei das die Büchse haltende Material bei Luftkühlung nicht mehr so intensiv gekühlt werden kann, wie das bei einer Wasserkühlung der Fall ist. Aus diesem Grunde erfolgt insbesondere im Falle einer Luftkühlung des Motors der Einbau der Laufbüchse 8 unter Ausbildung einer elastischen Umfassung, die aber erforderlichenfalls bei Wasserkühlung des Motors in Betracht gezogen werden kann. Hierzu wird auf die Fig. 4 - 9 Bezug genommen, in denen Bezugzeichen ab 20 benutzt sind.

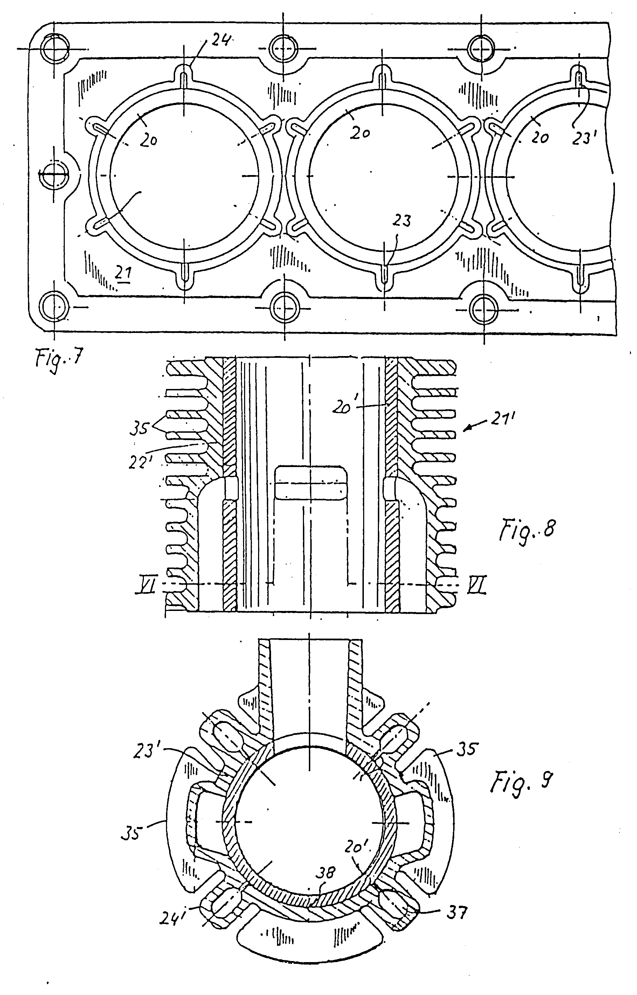

Wie aus Fig. 4, 5 ersichtlich, ist zwischen der Laufbüchse 20, bei der es sich um eine zylindrische Büchse aus keramischem Material (bspw. Si-SiC) handelt, und dem Zylinderblock 21 eine Haltebüchse 22 (aus bspw. Al oder GG) angeordnet, wobei diese Haltebüchse 22 mit sechs nur gegen die Laufbüchse 20 offenen, sich über die ganze Länge der Büchse erstreckenden, achsparallelen Dehnungsfugen 23 versehen ist. Diese Dehnungsfugen 23 sind blockseitig von einer entsprechenden Fugenumfassung 24 überbrückt, d.h., die ganze Haltebüchse 22 besteht aus einem Stück, die nach innen offene Nuten in Form der Dehnungsfugen 23 aufweist und nach außen achsparallel verlaufende rippenartige Stege (Fugenumfassung 24), in denen sich die Fugen 23 erstrecken. Die Haltebüchse 22 ist dabei in gleicher Weise und wie aus Fig. 4 ersichtlich, wie die bisherigen sogenannten "nassen" Laufbüchsen in den Zylinderblock 21 eingebunden, wofür die betreffenden Anschlußwände 27, 28 des Zylinderblockes 21 mit entsprechenden kreisförmigen Öffnungen versehen sind, wie dies mit den Halbschnitten der Fig. 5, 6 verdeutlicht ist. Die Abdichtung gegen den gestrichelt angedeuteten, wasserführenden Raum 29 erfolgt in bekannter Weise durch geeignete Abdichtung. Wie ersichtlich, ist für einen derartigen Einsatz in einen Block 21 die Haltebüchse 22 mit zwei Halteflanschen 30, 31 versehen, die am Innenumfang von den Dehnungsfugen 23 ebenfalls durchgriffen sind. Am unteren Ende ist die Haltebüchse 22, wie aus Fig. 4 ersichtlich, mit einer nach innen gerichteten Laufbüchsenunterfassung 32 versehen. Bei Anordnung mehrerer Zylinder in einem Block 21 stellt sich dieser bei abgenommenem Zylinderkopf 33 und abgenommener Kopfdichtung 34 gemäß Fig. 7 dar.

In den Fig. 8, 9 sind für entsprechende Teile die entsprechenden Bezugzeichen mit Index ' versehen und im Prinzip gilt für diese Ausführungsform das Gleiche wie vorbeschrieben, nur mit dem Unterschied, daß hierbei der mit Kühlrippen 35 versehene Block 21' unmittelbar selbst die Haltebüchse 22' für die keramische Laufbüchse 20' bildet. Um der Tendenz einer Umfangsdehnung der Haltebüchse 22 im Sinne der Doppelpfeile 36 gemäß Fig. 5, 6 ohne Innendurchmesservergrößerung entgegenzukommen, können die Fugen 23', und dies gilt auch für die Fugen der Haltebüchse 22 gemäß Fig. 4, 5, wie dargestellt, derart ausgebildet sein, daß diese in einen querschnittsgrößeren Fugeninnenraum 37 übergehen, der sich in der Fugenumfassung 24' erstreckt, die in ihrer Wandstärke mindestens der Wandstärke der Haltebüchse 22' entsprechen sollte.

Wie sich bei durchgeführten Versuchen gezeigt hat, funktioniert dieses Konstruktionsprinzip einwandfrei, d.h., in beiden Fällen bleibt der Stützkontakt durch die Haltebüchse 22 bzw. 22' für die sich weniger ausdehnende Lagerbüchse 20, 20' dadurch erhalten, daß sich zwar der Innenumfang der Haltebüchse ausdehnt, wobei sich aber diese Ausdehnung nicht in einem Größerwerden des Innendurchmessers niederschlägt, sondern in einer Verengung der zur Verfügung stehenden Fugen 23 bzw. 23', wobei aber andererseits die Haltebüchse auch ihren Kontakt zum Blockmaterial im Falle der Ausführungsbeispiele nach Fig. 4, 5 beibehält.

Die den Haltebüchsen 22, 22' zu vermittende Vorspannung, was ebenfalls wesentlich ist, wird dadurch erreicht, daß man die keramische Laufbüchse beim Druckguß der Haltebüchse mit einbindet (für die Ausbildung der Dehnungsfugen sind dabei querschnittsentsprechende ziehbare Kernleisten vorzusehen), wobei sich beim Erkalten des Gusses die Vorspannung ergibt, oder daß man die vorgefertigte Haltebüchse im erwärmten Zustand aufzieht und mit Kaltwerden aufschrumpft, was natürlich entsprechend bearbeitete Kontaktflächen 38 voraussetzt.

Was den modifizierten Kohlenstoff für den Kolben betrifft, so ist auf folgendes hinzuweisen:
Die Biegefestigkeit handelsüblicher Feinkornkohlenstoffe erreicht Werte um maximal $\sigma_B$ = 50 - 80 N/mm² und liegt damit unter der von Aluminiumlegierungen ($\sigma_B$ = 120 N/mm² bei 250° C). Obwohl Feinkornkohlenstoff im Gegensatz zu Aluminiumlegierungen den Vorteil besitzt, daß die Festigkeit mit steigender Temperatur nicht nachläßt, sondern sogar etwas zunimmt, ist die Biegefestigkeit verfügbarer unbehandelter Feinkornkohlenstoffe den Beanspruchungen in einem Verbrennungsmotor nicht gewachsen, d.h., aus diesem Grunde ist es erforderlich, modifizierte Kohlenstoffe zu verwenden, die bspw. durch Hochtemperaturmischprozesse oder geeignete Preß- und Glühverfahren gewonnen werden können. Als Additive für solche modifizierten Kohlenstoffe kommen in Frage:
Verwendung von oxydischem, carbidischem, nitridischem Keramikpulver (Keramikhybride); Keramikbildner als Additive mit in situ-Reaktionen; metallische Additive (Keramikbildner und Nicht-Keramikbildner); Imprägnierung mit metallorganischen Verbindungen und in situ-Reaktion zu Keramik (z.B. titanat- oder silikatorganische Verbindungen); Zugabe von C-Fasern unterschiedlichen Typs und Länge; Verwendung von Whiskern (z.B. SiC); Einsatz von oxydischen Fasern; Imprägnieren von hochfesten Feinstkornkohlenstoffen mit Keramikbildnern und Nicht-Keramikbildnern (Metallhybride). Additive mit Faserstruktur werden bevorzugt verwendet. Je nach Art des Kohlenstoffes und des Additives können die Additive in einer Größenordnung von 5 - 60 %, vorzugsweise von 10 - 30 %, im Kohlenstoff enthalten sein.

**Patentansprüche**

1. Kolbenmotor mit mindestens einem Zylinder (4), in dem ein mit mindestens einem Kolbenring (5) bestückter Kolben (1) angeordnet ist, der aus einem modifizierten Kohlenstoff in Form von Preßgraphit oder Elektrographit mit einer Mindest-Biegefestigkeit von 75 N/mm² besteht und dessen Beaufschlagungsfläche (2') eine abbrandfeste Schutzschicht, z.B. aus Siliziumkarbid, aufweist, und in dem mindestens die Laufffläche (3) des Zylinders (4) aus gleichem aber laufflächenvergütetem oder einem ähnlichen Material mit etwa gleichem Wärmedehnungsverhalten wie das des Kolbens (1) sowie der Kolbenring (5) aus dem gleichen und/oder abbrandfest vergütetem Material gebildet sind und der Kolbenring (5) hinsichtlich seiner, Elastizität konstruktiv oder durch Wahl ausreichend elastischen Materials die erforderliche Elastizität vermittelt.

2. Kolbenmotor nach Anspruch 1,
dadurch gekennzeichnet,
daß der Kohlenstoff des Kolbens festigkeitserhöhende Additive in Form von gleichmässig verteilten Keramikhybriden, Metallhybriden, Kohlenstoffasern und dgl. enthält.

3. Kolbenmotor nach Anspruch 2,
dadurch gekennzeichnet,
daß die Additive in einer Menge von 5 bis 60%, vorzugsweise 10 bis 30%, in dem Kohlenstoff enthalten sind.

4. Kolbenmotor nach Anspruch 2,
dadurch gekennzeichnet,
daß die Additive in Form von Metall- oder Keramikhybriden als Faserstruktur in dem Kohlenstoff verteilt enthalten sind.

5. Kolbenmotor nach einem der Ansprüche 1 bis 4,
dadurch gekennzeichnet,
daß zumindest die Laufffläche (3) des Zylinders aus dem gleichen Kohlenstoff wie der Kolben besteht, jedoch z.B. durch Karbidisieren, Silizieren oder Nitrieren, gehärtet ist.

6. Kolbenmotor nach einem der Ansprüche 1 bis 4,

dadurch gekennzeichnet,
daß die Lauffläche (3) des Zylinders aus einem keramischen Werkstoff, z.B. Siliziumkarbid oder Siliziumnitrid, gebildet ist.

7. Kolbenmotor nach einem der Ansprüche 1 bis 6,
dadurch gekennzeichnet,
daß der Kolbenring (5) aus einem keramikbeschichteten Ferroguß, aus einem Keramikmaterial, z.B. Zirkonoxid, oder aus durch Karbidisieren, Silizieren oder Nitrieren gehärtetem Kohlenstoff-Fasermaterial gebildet ist.

8. Kolbenmotor nach einem der Ansprüche 1 bis 6,
dadurch gekennzeichnet,
daß der aus dem gleichen Kohlenstoff wie der Kolben bestehende Kolbenring eine gehärtete Lauffläche aufweist und aus zwei Teilen (5') gebildet ist, wobei an mindestens einem Stoßstellenbereich (6) ein federndes Spreizelement vorgesehen ist.

9. Kolbenmotor nach einem der Ansprüche 1 bis 6,
dadurch gekennzeichnet,
daß der Kolbenring (5) aus einem selbstschmierenden Material, z.B. Graphit od.dgl., gebildet ist.

10. Kolbenmotor nach einem der Ansprüche 1 bis 9,
dadurch gekennzeichnet,
daß die Lauffläche des Zylinders an einer Laufbüchse (8, 20) ausgebildet ist, die im Zylinderblock (9) elastisch aufgenommen ist.

11. Kolbenmotor nach Anspruch 10,
dadurch gekennzeichnet,
daß zwischen der Laufbüchse (20) mit gegenüber dem Material des Zylinderblockes geringerem Ausdehnungskoeffizienten und dem wassergekühlten Zylinderblock (21) eine in sich vorgespannte Haltebüchse (22) aus Material mit dem gleichen oder angenähert gleichen Ausdehnungskoeffizienten wie das Material des Zylinderblockes angeordnet ist und die Haltebüchse (22) mit mindestens zwei nur gegen die Laufbüchse (20) offenen, sich über deren ganze Länge erstreckenden achsparallelen Dehnungsfugen (23) versehen ist, die mit Fugenumfassungen (24) überbrückt sind.

12. Kolbenmotor nach Anspruch 10,
dadurch gekennzeichnet,
daß die Laufbüchse (20') aus einem Material mit gegenüber dem Material des Zylinderblok-

kes geringerem Ausdehnungskoeffizienten besteht und daß der luftgekühlte Zylinderblock (21') in Form einer in sich vorgespannten Haltebüchse (22') ausgebildet und mit mindestens zwei nur gegen die Laufbüchse (20') offenen, sich über deren ganze Länge erstreckenden achsparallelen Dehnungsfugen (23') versehen ist, die mit Fugenumfassungen (24') überbrückt sind.

13. Kolbenmotor nach einem der Ansprüche 1 bis 12,
dadurch gekennzeichnet,
daß der Kolbenbolzen (13) aus Siliziumnitrid besteht.

14. Kolbenmotor nach einem der Ansprüche 1 bis 13,
dadurch gekennzeichnet,
daß die Bohrungen (12) des Kolbens (1) zur Aufnahme eines aus Stahl bestehenden Kolbenbolzens (13) in Bezug auf den Außendurchmesser des Kolbenbolzens mit einem Spiel derart bemessen sind, daß bei Betriebstemperatur des Motors ein minimales Spiel zwischen Kolbenbolzen und Bohrung besteht.

**Claims**

1. A piston engine comprising at least one cylinder (4) in which there is arranged a piston (1) which is fitted with at least one piston ring (5) and which comprises a modified carbon in the form of pressed graphite or electrographite with a minimum bending strength of 75 N/mm$^2$ and the top surface (2') of which has a protective layer which is resistant to burning away, for sample of silicon carbide, and in which at least the contact surface (3) of the cylinder (4) is formed from the same material which however has been treated at the contact surface or a similar material with substantially the same thermal expansion characteristic as that of the piston (1) and the piston ring (5) is formed from the same material and/or a material treated to make it resistant to burning away and the piston ring (5), in respect of its elasticity, has the required elasticity structurally or by the choice of sufficiently elastic material.

2. A piston engine according to claim 1 characterised in that the carbon of the piston includes strength-enhancing additives in the form of uniformly distributed ceramic hybrids, metal hybrids, carbon fibres and the like.

3. A piston engine according to claim 2 characterised in that the additives are contained in the carbon in an amount of from 5 to 60%, preferably from 10 to 30%.

4. A piston engine according to claim 2 characterised in that the additives are contained distributed in the carbon in the form of metal or ceramic hybrids as a fibre structure.

5. A piston engine according to one of claims 1 to 4 characterised in that at least the contact surface (3) of the cylinder comprises the same carbon as the piston but is hardened for example by carbidising, silicidising or nitriding.

6. A piston engine according to one of claims 1 to 4 characterised in that the contact surface (3) of the cylinder is formed from a ceramic material, for example silicon carbide or silicon nitride.

7. A piston engine according to one of claims 1 to 6 characterised in that the piston ring (5) comprises a ceramic-coated cast iron, a ceramic material, for example zirconium oxide, or carbon fibre material which is hardened by carbidising, silicidising or nitriding.

8. A piston engine according to one of claims 1 to 6 characterised in that the piston ring which comprises the same carbon as the piston has a hardened contact surface and is formed from two portions (5'), wherein a resilient spreading element is provided at at least one ring gap region (6).

9. A piston engine according to one of claims 1 to 6 characterised in that the piston ring (5) is formed from a self-lubricating material, for example graphite or the like.

10. A piston engine according to one of claims 1 to 9 characterised in that the contact surface of the cylinder is formed on a cylinder bore liner (8, 20) which is elastically accommodated in the cylinder block (9).

11. A piston engine according to claim 10 characterised in that arranged between the cylinder bore liner (10) which has a lower coefficient of expansion than the material of the cylinder block, and the water-cooled cylinder block (21), is a holding sleeve (22) which is prestressed in itself and which comprises material with the same or approximately the same coefficient of expansion as the material of the cylinder block, and the holding sleeve (22) is provided with at least two expansion joints (23) which are parallel to the axis and which are open only towards the cylinder bore liner (20) and which extend over the entire length thereof and which are bridged over with joint enclosure means (24).

12. A piston engine according to claim 10 characterised in that the cylinder bore liner (20') comprises a material with a lower coefficient of expansion than the material of the cylinder block and that the air-cooled cylinder block (21') is in the form of a holding sleeve (22') which is prestressed in itself, and the cylinder block is provided with at least two expansion joints (23') which are parallel to the axis and which are open only towards the cylinder bore liner (20') and which extend over the entire length thereof and which are bridged over with joint enclosure means (24').

13. A piston engine according to one of claims 1 to 12 characterised in that the gudgeon pin (13) comprises silicon nitride.

14. A piston engine according to one of claims 1 to 13 characterised in that the bores (12) in the piston (1) for receiving a gudgeon pin (13) which comprises steel are dimensioned with a clearance relative to the outside diameter of the gudgeon pin such that when the engine is at its operating temperature there is a minimum clearance between the gudgeon pin and the bore.

**Revendications**

1. Moteur à piston comprenant au moins un cylindre (4), dans lequel est agencé un piston (1) qui est garni d'au moins un segment (5) et est constitué d'un carbone modifié sous la forme de graphite comprimé ou d'électrographite ayant une résistance à la flexion minimale de 75 N/mm$^2$ et dont la surface de sollicitation (2') présente une couche de protection résistant au feu, par exemple en carbure de silicium, et dans lequel au moins la surface de glissement (3) du cylindre (4) est formée d'une matière identique, mais améliorée du point de vue surface de glissement, ou d'une matière analogue ayant approximativement le même comportement à la dilatation thermique que celle du piston (1), le segment (5) étant formé de la même matière et/ou d'une matière améliorée quant à la résistance au feu, le segment (5) procurant, en ce qui concerne son élasticité, l'élasticité requise par voie de construction ou par un choix d'une matière suffisamment élastique.

2. Moteur suivant la revendication 1, caractérisé en ce que le carbone du piston contient des additifs qui augmentent la résistance, sous la forme d'hybrides céramiques, d'hybrides métalliques, de fibres de carbone et d'éléments analogues, répartis uniformément.

3. Moteur à piston suivant la revendication 2, caractérisé en ce que les additifs sont contenus dans le carbone en une quantité de 5 à 60 %, de préférence de 10 à 30 %.

4. Moteur à piston suivant la revendication 2, caractérisé en ce que les additifs sous la forme d'hybrides métalliques ou céramiques sont contenus de manière répartie dans le carbone sous la forme d'une structure fibreuse.

5. Moteur à piston suivant l'une des revendications 1 à 4, caractérisé en ce qu'au moins la surface de glissement (3) du cylindre est constituée du même carbone que le piston, mais en ce qu'elle est durcie par exemple par une carburation, une siliciuration ou une nitruration.

6. Moteur à piston suivant l'une des revendications 1 à 4; caractérisé en ce que la surface de glissement (3) du cylindre est formée d'un matériau céramique, par exemple de carbure de silicium ou de nitrure de silicium.

7. Moteur à piston suivant l'une des revendications 1 à 6, caractérisé en ce que le segment (5) est formé en une ferrofonte revêtue de céramique, en une matière céramique, par exemple de l'oxyde de zirconium, ou en une matière à base de fibres de carbone, durcie par carburation, siliciuration ou nitruration.

8. Moteur à piston suivant l'une des revendications 1 à 6, caractérisé en ce que le segment constitué du même carbone que le piston présente une surface de glissement durcie et en ce qu'il est formé de deux parties (5'), un élément d'écartement élastique étant prévu sur au moins une zone d'emplacement de joint (6).

9. Moteur à piston suivant l'une des revendications 1 à 6, caractérisé en ce que le segment (5) est formé d'une matière auto-lubrifiante, par exemple du graphite ou une matière analogue.

10. Moteur à piston suivant l'une des revendications 1 à 9, caractérisé en ce que la surface de glissement du cylindre est réalisée sur un fourreau de glissement (8, 20) qui est logé de manière élastique dans le bloc-cylindre (9).

11. Moteur à piston suivant la revendication 10, caractérisé en ce que, entre le fourreau de glissement (20) présentant un coefficient de dilatation plus faible que la matière du bloc-cylindre et le bloc-cylindre refroidi à l'eau (21), une douille de retenue (22) précontrainte en soi, en une matière présentant le même ou approximativement le même coefficient de dilatation que la matière du bloccylindre, est agencée et en ce que la douille de retenue (22) est pourvue d'au moins deux joints de dilatation (23) parallèles à l'axe qui sont ouverts uniquement vers le fourreau de glissement (20) et s'étendent sur toute la longueur de celui-ci et par-dessus lesquels passent des enveloppes de joint (24).

12. Moteur à piston suivant la revendication 10, caractérisé en ce que le fourreau de glissement (20') est constitué d'une matière présentant un coefficient de dilatation plus faible que la matière du bloc-cylindre et en ce que le bloc-cylindre (21') refroidi à l'air est réalisé sous la forme d'une douille de retenue (22') précontrainte en soi et est pourvu d'au moins deux joints de dilatation (23') parallèles à l'axe qui sont ouverts uniquement vers le fourreau de glissement (20') et s'étendent sur toute la longueur de celui-ci et par-dessus lesquels passent des enveloppes de joint (24').

13. Moteur à piston suivant l'une des revendications 1 à 12, caractérisé en ce que l'axe de piston (13) est constitué de nitrure de silicium.

14. Moteur à piston suivant l'une des revendications 1 à 13, caractérisé en ce que les perforations (12) du piston (1) destinées à recevoir un axe de piston (13) constitué d'acier sont mesurées par rapport au diamètre externe de l'axe de piston avec un jeu tel que, à la température de service du moteur, un jeu minimal existe entre l'axe du piston et la perforation.

Fig.1

Fig.2

Fig.3

Fig.4

Fig.5

Fig.6

Fig. 7

Fig. 8

Fig. 9